# EUROPEAN PATENT SPECIFICATION

(11) **EP 2 398 327 B1**
(45) Date of publication and mention of the grant of the patent: **19.12.2012**
(21) Application number: 10704809.2
(22) Date of filing: 16.02.2010
(51) Int. Cl.: A01N 43/90, A01N 25/10, A01N 25/24, A01P 3/00

(54) **POLYENE ANTIFUNGAL COMPOSITIONS**
ANTIFUNGALE POLYENZUSAMMENSETZUNGEN
COMPOSITIONS ANTIFONGIQUES DE POLYÈNE

(30) Priority: 17.02.2009 EP 09152968; 17.06.2009 EP 09162903
(43) Date of publication of application: 28.12.2011
(73) Proprietor: DSM IP Assets B.V., 6411 TE Heerlen (NL)
(72) Inventor: STARK, Jacobus, NL-3069 ZM Rotterdam (NL); RIJN, VAN, Ferdinand, Theodorus, Jozef, NL-2614 LX Delft (NL); VIS, Albert-Jon, NL-3039 WL Rotterdam (NL)
(74) Representative: Biermann, Jan
(86) International application number: PCT/EP2010/051892
(87) International publication number: WO 2010/094670

(56) References cited:
- EP-A- 0 867 124
- WO-A-2004/067699
- WO-A-2007/039825
- WO-A-2007/095258
- US-A- 5 552 151

## Description

### Field of the invention

The present invention discloses antimicrobial compositions suitable for preventing fungal diseases on agricultural products such as plants, fruits and vegetables.

### Background of the invention

It is estimated that about 25% of the world crop production is lost due to microbial spoilage, of which spoilage by fungi is by far the most important cause. Not only from an economical point of view, but also from a humane point of view it is of great importance to prevent spoilage of food products. After all, in many parts of the world people suffer from hunger.

To prevent fungal damage of agricultural products such as plants, crops and fruits, fungicides are currently applied *e.g*. by spraying. Several disadvantages are associated with the currently applied fungicides.

Firstly, due to their frequent use several fungi have developed partial or even complete resistance to certain fungicides. So, in spite of extensive treatment with the fungicides presently applied, spoilage problems may still occur.

Secondly, many of the fungicides currently applied to prevent microbial spoilage of agricultural products cause environmental pollution and human health problems. On the one hand, workers safety is an important issue, as it is known that farm workers often come in close contact with high concentrations of these harmful fungicides. On the other hand, due to the use of large amounts of fungicides, residues of these fungicides, even exceeding maximum residue limits, may still be on or in the agricultural products when customers buy them. Cause of concern, especially in children, is the threat of use of several fungicides which could combine to create a cocktail effect. Moreover, there is a growing concern about the presence in food of endocrine disrupting chemicals which can disrupt hormone levels and are suspected of being linked to declining sperm counts and increased rates of breast and testicular cancers. It is thought that these chemicals can cause problems at very low doses and a particular worry is the potential for interactive effects between the chemicals which, apart from fungicidal compositions, can come from many other sources.

Since due to upcoming regulation in the EU and in other countries it is expected that some of the frequently used synthetic fungicides will be banned, the future problems concerning fungi are expected to increase. To prevent considerable economic losses for the industry in the near future, there is a need for environmental friendly natural fungicides. Also from an environmental and health point of view it is of importance to obtain alternatives for the harmful synthetic fungicides which are applied nowadays.

Natamycin, a polyene macrolide antimycotic, has been used for more than 40 years as a preservative for the prevention of spoilage resulting from yeast or mould growth associated with certain foods such as cheeses, sausages and beverages such as fruit juices and wine. This natural preservative, which is produced by fermentation using *Streptomyces natalensis,* is widely used throughout the world as a food preservative and has a long history of safe use in the food industry. It is very effective against all known food spoilage moulds. Although natamycin is applied for many years in *e.g*. the cheese industry, up to now development of resistant mould species was never observed.

Natamycin has a low solubility in water (30-50 mg/l) and only the dissolved fraction has antifungal activity. Since natamycin has a MIC (Minimal Inhibitory Concentration) of less than 10 mg/l for most fungi, the dissolved concentration is in most cases sufficient to prevent fungal development. In case of *e.g*. surface treatment of cheese under normal conditions, denaturation of dissolved natamycin is compensated by dissolution of undissolved natamycin and diffusion over the surface to which natamycin has been supplied by *e.g*. spraying or via a cheese coating.

It has been reported that natamycin, either alone or in combination, can be used for controlling fungal growth in agricultural products. WO 2005/074687 discloses that natamycin is suitable for protecting banana plants against fungal diseases. In WO 97/47202 has been disclosed that natamycin in combination with a fungal cell wall degrading enzyme is suitable in the antifungal treatment of agricultural products, while in WO 2008/009657 it was demonstrated that natamycin in combination with phosphite protect agricultural products against fungal diseases.

When used in farming or agricultural industries, natamycin is mostly applied as a solution by spraying. However, it can also be applied by dipping, immersion or painting. There exist several disadvantages associated with the application of natamycin solutions on agricultural products by *e.g*. spraying. Firstly, due to the low shear viscosity of natamycin solutions, natamycin can become inhomogeneously distributed on the surface of the agricultural products. As a consequence thereof, some parts of the product may not have sufficient natamycin on the surface, while in other parts the applied natamycin may form pools. Natamycin might even run off the surface of the agricultural products. Secondly, natamycin may be rinsed off agricultural products such as *e.g*. plants due to rain or irrigation. Thirdly, there is the risk of wind-drift, *i.e*. a poor ability to be sprayed onto agricultural products without dispersing, resulting in a decrease of the amount of natamycin reaching the agricultural products. All these disadvantages lead to a decrease in efficiency of the natamycin and consequently result in a lack of protection of the agricultural products against fungal spoilage.

Some of the above disadvantages may be removed by the addition of a thickening agent to the natamycin solution. The use of a thickening agent such as xanthan gum increases the viscosity of the natamycin solution and may lead to a better and more homogeneous distribution of the natamycin on the product (see EP 0 867 124 and US 5,552,151).

Despite the solutions proposed in the art, there is however still a need for natamycin compositions that have improved characteristics with respect to adhesion to the surface of products such as *e.g*. agricultural products and consequently lead to a decrease of microbial spoilage of these products.

### Description of the invention

The present invention solves the problem by providing a new antimicrobial, *e.g*. antifungal, composition comprising a polyene antifungal agent and a thickening agent. In an embodiment, the polyene antifungal agent is selected from the group consisting of natamycin, nystatin, amphotericin B, trienin, etruscomycin, filipin, chainin, dermostatin, lymphosarcin, candicidin, aureofungin A, aureofungin B, hamycin A, hamycin B or lucensomycin. In a preferred embodiment the polyene antifungal agent is natamycin. In an embodiment the compositions may also contain two or more different polyene fungicides. It is to be understood that derivatives of polyene fungicides including, but not limited to, salts or solvates of polyene fungicides or modified forms of polyene fungicides may also be applied in the compositions of the invention. An example of a commercial product containing natamycin is the product with the brand name Delvocid®. Delvocid® is produced by DSM Food Specialties (The Netherlands) and contains 50% (w/w) natamycin. Said commercial products can be incorporated in the compositions of the invention.

The antimicrobial composition of the present invention generally comprises from about 0.005 g/l to about 100 g/l and preferably from about 0.01 g/l to about 50 g/l of a polyene fungicide. Preferably, the amount is from 0.01 g/l to 3 g/l. In a preferred embodiment, the polyene fungicide is natamycin.

In an embodiment the compositions of the present invention comprise methylhydroxy ethylcellulose (MHEC) as a thickening agent. The amount of MHEC in the composition according to the invention is preferably from 0.05 to 4% by weight, in particular from 0.2 to 2% by weight, based on the total amount of dry matter in the composition. MHEC having a high (*e.g*. 3000 mPas), medium (*e.g*. 1500 mPas) or low (*e.g*. 400 mPas) mean viscosity can be used. MHEC types having a high, medium or low mean viscosity are well known to a person skilled in the art (*e.g*. Tylopur® MHB3000P or Walocel®MW400). Mean viscosity values are usually determined with a Hoeppler falling ball viscometer in a 2% (w/w) aqueous solution at 20°C. The composition of the invention may also comprise two or more different thickening agents, as long as one of the thickening agents is MHEC. In a preferred embodiment the compositions comprise only MHEC as thickening agent.

The antimicrobial composition according to the invention may further comprise at least one UV absorber (UV absorbing agent). The compositions of the invention may comprise from about 0.01 g/l to about 100 g/l, preferably from about 0.02 g/l to about 25 g/l and in particular from about 0.03 g/l to about 10 g/l UV absorber. In an embodiment the above amounts are present in a ready-to-use solution.

Compositions of the invention may have a pH of from 3.5 to 8, preferably of from 5 to 7. They may be solid, *e.g*. powder compositions, or may be liquid. The compositions of the present invention can be aqueous or non-aqueous ready-to-use compositions, but may also be aqueous or non-aqueous concentrated compositions/suspensions or stock compositions, suspensions and/or solutions which before use have to be diluted with a suitable diluent such as water or a buffer system. Alternatively, the compositions of the invention can also be used to prepare coating emulsions. The compositions of the present invention can also have the form of concentrated dry products such as *e.g*. powders, granulates and tablets. They can be used to prepare compositions for immersion or spraying of products such as agricultural products including plants, crops, vegetables and/or fruits.

In a further embodiment the antimicrobial composition may further comprise at least one additional compound selected from the group consisting of a sticking agent, a surfactant, an emulsifier, a detergent, a preservative, a stabilizer, a spreading agent, an antioxidant, an anti-foam-forming agent, a wetting agent, a further antimicrobial agent, a filler, a spray oil, a dispersing agent, and a flow additive.

Examples of sticking agents include, but are not limited to, latex based products like Prolong® (Holland Fyto B.V., The Netherlands) and Bond® (Loveland Industries Ltd), pilonene/terpene based products like Nu-film® (Hygrotech Saad) and Spray-Fast® (Mandops) and long chain polysaccharides. Alternatively, the sticking agent may be a polymer or co-polymer from a type of polymer such as polyacrylate and polyethylene *e.g*. Neocryl® (DSM, The Netherlands). The composition of the invention may also comprise two or more different sticking agents.

Examples of surfactants, detergents, emulsifiers, spreading agent and wetting agents include, but are not limited to, anionic tensides such as sodium lauryl sulphate or polyethylene alkyl ethers or polyoxyethylethers, *e.g* Tween® 60, 61 or 65. Other examples of useful surfactants are organo silicones, sulfosuccinates, alcohol ethoxylates, fatty acid ethoxylates, fatty acid propoxylates and the commercial product Zipper® (Asepta BV, The Netherlands). The composition of the invention may also comprise two or more different of the above mentioned agents.

Examples of suitable preservatives and antimicrobials include, but are not limited to, weak acid preservatives such as sorbic acid, lactic acid, benzoic acid, propionic acid, citric acid, acetic acid, or an alkali metal or alkali earth metal salt thereof; inorganic acids such as hydrochloric acid; imidazoles; borax; calcium bisulphite; calcium disodium EDTA; dehydroacetic acid; isothiazoles (*e.g*. cit/mit); sulphitites or sulphur dioxine; salt; dimethyl dicarbonate, nitrate or nitrite; and modified air packaging compositions known in the art.

Antimicrobial agents also include antifungal compounds such as *e.g*. imazalil (Janssen Pharmaceutica NV, Belgium); thiabendazole (*e.g*. the commercial product TECTO® Flowable SC of Syngenta, USA); benomyl, captan (nonsystemic phthalimide fungicide); prochloraz (N-propyl-N-[2-(2,4,6-trichlorophenoxy)ethyl] imidazole-1-carboxamide); and commercial products known under the name Tocsin® M (Cerexagri Inc, active ingredient thiofanaat-methyl); Jet-5® (Certis Europe BV, The Netherlands, active ingredients peracetic acid and hydrogenperoxide); Shirlan® (Syngenta, Switserland, active ingredient fluazinam); biphenyl; and orthophenyl phenol. Further suitable antifungal compounds can be found in Gewasbeschermingsgids 2006, Gids voor gewasbescherming in de land- en tuinbouw en het openbaar en particulier groen, Plantenziektenkundige Dienst, 2006, 560 pages, Paperback, Gewasbeschermingsgids - ISSN 1571-201X, Volume 18.

Furthermore, antimicrobial agents include compounds to combat insects, nematodes, mites and bacteria. Examples of such compounds are Admire® (Bayer); formalin; Actellic® (Syngenta, Switserland), nisin, lysozyme, propoxur (Bayer); bifenazate (Uniroyal); dichlorvos (Amvac Chemical Corporation); imidacloprid (Bayer); fenamiphos (Mobay Chemical Corporation); oxamyl (Dupont); copper hydroxide; streptomycin; and ethyl parabenzoate.

Examples of suitable antimicrobial agents further include, but are not limited to, natural crop protection compounds belonging to the group of phosphites, *e.g*. KH₂PO₃ or K₂HPO₃ or a mixture of both phosphite salts. Phosphite containing compounds as used herein means compounds comprising a phosphite group, *i.e*. µPO₃ (in the form of *e.g.* H₂PO₃⁻, HPO₃²⁻ or PO₃³⁻) or any compound which allows the release of a phosphite ion including compounds such as phosphorous acid and phosphonic acid as well as derivatives thereof such as esters and/or alkali metal or alkaline earth metal salts thereof. In case the compositions of the present invention comprise a polyene fungicide (*e.g*. natamycin) and at least one phosphite containing compound, they preferably comprise 0.1 g or less lignosulphonate, more preferably 0.1 g or less polyphenol, per gram polyene fungicide. Preferably, they comprise 0.01 g or less lignosulphonate, more preferably 0.01 g or less polyphenol, per gram polyene fungicide. In particular, they are free of lignosulphonate and preferably free of polyphenol. Suitable examples of phosphite containing compounds are phosphorous acid and its (alkali metal or alkaline earth metal) salts such as potassium phosphites *e.g*. KH₂PO₃ and K₂HPO₃, sodium phosphites and ammonium phosphites, and (C₁-C₄) alkyl esters of phosphorous acid and their salts such as aluminum ethyl phosphite (fosetyl-Al), calcium ethyl phosphite, magnesium isopropyl phosphite, magnesium isobutyl phosphite, magnesium sec-butyl phosphite and aluminum N-butyl phosphite. Of course, mixtures of phosphite containing compounds are also encompassed. A mixture of *e.g*. KH₂PO₃ and K₂HPO₃ can easily be obtained by *e.g*. adding KOH or K₂CO₃ to a final pH of 5.0 - 6.0 to a KH₂PO₃ solution. As indicated above, precursor-type compounds which in the crop or plant are metabolized into phosphite compounds can also be included in the compositions of the present invention. Examples are phosphonates such as the fosetyl-aluminium complex. In *e.g*. a crop or plant the ethyl phosphonate part of this molecule is metabolized into a phosphite. An example of such a compound in the commercial ethyl hydrogen phosphonate product called Aliette® (Bayer, Germany).

The composition will generally comprise 0.5 g/l to 1000 g/l and preferably 1 g/l to 500 g/l potassium phosphite. More preferably, the amount of potassium phosphite is from 2 g/l to 200 g/l. In an embodiment the above amounts are present in a ready-to-use solution. According to the present invention also other phosphites may be used in equimolar amounts to the potassium phosphite. In an embodiment the concentration of the phosphite, *i.e*. PO⁻₃ group, in the composition of the invention is between 1 and 1000 mM, preferably between 10 and 750 mM and more preferably between 25 and 500 mM. The composition of the invention may also comprise two or more different preservatives and/or antimicrobial agents.

Examples of suitable stabilizers include, but are not limited to, agar, alginic acid, alginate, calcium lactobionate, carrageenan, gellan gum, and guar gum. The composition of the invention may also comprise two or more different stabilizing agents.

Examples of suitable antioxidants include, but are not limited to, amino acids (*e.g*. glycine, histidine, tyrosine, tryptophan) and their derivatives, imidazole (*e.g*. urocanic acid) and derivatives, peptides such as D,L-carnosine, D-carnosine, L-carnosine and derivatives (*e.g*. anserine), carotenoids, carotenes (*e.g*. α-carotene, β-carotene, lycopene) and derivatives, chlorogenic acid and derivatives, lipoic acid and derivatives (*e.g*. dihydrolipoic acid), aurothioglucose, propylthiouracil and other thiols (*e.g*. thioredoxine, glutathione, cysteine, cystine, cystamine and its glycosyl-, N-acetyl-, methyl-, ethyl-, propyl-, amyl-, butyl- and lauryl-, palmitoyl-; oleyl-, y-linoleyl-, cholesteryl- and glycerylester) and the salts thereof, dilaurylthiodipropionate, distearylthiodipropionate, thiodipropionic acid and its derivatives (ester, ether, peptides, lipids, nucleotides, nucleosides and salts) as well as sulfoximine compounds (such as buthioninsulfoximine, homocysteinesulfoximine, buthioninsulfone, penta-, hexa-, heptathioninsulfoximine) in very low compatible doses (e.g. pmol bis µmol/kg), additionally (metal)-chelators (such as α-hydroxyfatty acids, palmic-, phytinic acid, lactoferrin), β-hydroxyacids (such as citric acid, lactic acid, malic acid), huminic acid, gallic acid, gallic extracts, bilirubin, biliverdin, EDTA, EGTA and its derivatives, unsaturated fatty acids and their derivatives (such as γ-linoleic acid, linolic acid, oleic acid), folic acid and its derivatives, ubiquinone and ubiquinol and their derivatives, vitamin C and derivatives (such as ascorbylpalmitate and ascorbyltetraisopalmitate, Mg-ascorbylphosphate, Na-ascorbylphosphate, ascorbyl-acetate), tocopherol and derivates (such as vitamin-E-acetate), mixtures of nat. vitamin E, vitamin A and derivatives (vitamin-A-palmitate and -acetate) as well as coniferylbenzoate, rutinic acid and derivatives, α-glycosylrutin, ferulic acid, furfurylideneglucitol, carnosine, butylhydroxytoluene, butylhydroxyanisole, trihydroxybutyrophenone, urea and its derivatives, mannose and derivatives, zinc and derivatives (*e.g*. ZnO, ZnSO₄), selen and derivatives (*e.g*. selenomethionin), stilbenes and derivatives (such as stilbenoxide, trans-stilbenoxide) and suitable derivatives (salts, esters, ethers, sugars, nucleotides, nucleosides, peptides and lipids) of the named active ingredients. The composition of the invention may also comprise two or more different antioxidants.

Examples of suitable anti-foam forming agents include, but are not limited to, Polyethylene glycol 8000, Polymethylsiloxane, Simethicone octanol, and silicone oils. The composition of the invention may also comprise two or more different anti-foam forming agents.

Examples of suitable fillers include, but are not limited to, montmorillonite, kaolin, veegum, bentonite, and talcum. The composition of the invention may also comprise two or more different fillers.

Examples of suitable dispersing agents include, but are not limited to, Morwet D-425, Pluronic P, and Silwet L-77. The composition of the invention may also comprise two or more different dispersing agents.

Examples of suitable spray oils include, but are not limited to, Bangle®, Banole®W, BANOLE®UBV, SprayTex M, Orchex 692, sunspray 11 E. The composition of the invention may also comprise two or more different spray oils.

Examples of suitable flow additives include, but are not limited to, kaolin, talcum, Wacker-Belsil® PMS MK, Wacker-Belsil® TMS 803, magnesium trisilicate, sodium aluminosilicate, bentonite, and polydimethylsiloxane. The composition of the invention may also comprise two or more different flow additives.

In an embodiment the composition of the invention comprises natamycin, a phosphite containing compound, MHEC, a suffosuccinate and optionally a preservative.

A product that is treated with an effective amount of an antimicrobial composition according to the invention is a further aspect of the present invention. The composition may be present on and/or in the product. Preferably, the product is normally susceptible to fungal spoilage such as *e.g*. a food product; feed product; agricultural product; a fabric; leather; paper; fibres; paint; and a coating.

Food and feed products include, but are not limited to, food and feed products for man or animals. Food or feed product to which the compositions of the invention may typically be applied include, but are not limited to, cheese; cream cheese; shredded cheese; cottage cheese; processed cheese; sour cream; dried fermented meat product including salamis and other sausages; wine; beer; yoghurt; juice and other beverages; salad dressing; cottage cheese dressing; dips; bakery products and bakery fillings; surface glazes and icing; spreads; pizza toppings; confectionery and confectionery fillings; olives; olive brine; olive oil; juices; tomato purees and paste; condiments; and fruit pulp and the like food products; as well as feed products, such as pet food, broiler feed fruits, etc.

Agricultural products include, but are not limited to, plants, crops, vegetables and/or fruits. If applied on plants, the composition of the invention can be applied on leaves; the stem; flowers; offshoot of the plants; seeds or cultivars and even on fruits. So, these parts of the plants treated with a composition of the present invention are also included in the present invention. The compositions of the invention may also be applied on bulbs, especially flower bulbs such as tulip, lily, narcissus, crocus or hyacinth; other bulbous crops such as *e.g*. onions; tubers; root-tubers; and rootstocks, such as seed-potatoes and dahlia. In addition, the compositions of the present invention may be used on cuttings or grafts such as generally applied to multiply flower plants, indoor plants or crops; seeds for growing of new plants and treatment of seeds that are stored as feed or feed (*e.g*. maize and wheat). Examples of cuttings or grafts are carnation; fuchsia; chrysanthemum; roses; fruit plants like tomato; melon; cucumber; and aubergine and plants grown in greenhouses.

The composition of the invention may also be used to prevent mould/fungal growth and/or mould/fungal infection on agricultural products such as grain; maize; coffee; beans; cocoa beans; soy beans; berries such as *e.g*. strawberries; citrus fruits such as *e.g*. oranges, mandarins, clementines, tangerines, limes, pomelos, kumquats, grapefruits and lemons; grapes; peaches; plums; bananas; pineapples; and cherries. Further, the composition of the invention may also be used during the drying and/or fermentation process of coffee and cocoa beans.

In an embodiment, the composition is applied on crops after harvesting, preferably crops that show a wound after harvesting. In other words, the harvesting of the crops results in a wound and the wound is treated with a composition according to the invention. In general, the wound occurs when the crop, *e.g*. fruit such as banana or pineapple, is removed from the plant it is grown on. Also wounds present on cut flowers or stalks/stems of plants can be treated with a composition according to the invention to prevent mould/fungal growth and/or mould/fungal infection.

Finally, the composition of the present invention may also be used for the treatment of growing crops and/or plants in the field including, but not limited to, cereal crops such as grain and maize; vegetables; coffee plants; cocoa plants; fruit trees; grape plants; strawberry plants; citrus fruit plants such as plants of oranges, mandarins, clementines, tangerines, limes, pomelos, kumquats, grapefruits and lemons; cucumber plants; banana plants; pineapple plants; and tomato plants.

The invention provides products treated with a composition of the present invention. The treated products may contain a coating comprising a composition of the invention. In an embodiment the treated products comprise from 0.000001 to 200 mg/dm², preferably from 0.00001 to 100 mg/dm², more preferably from 0.00005 to 10 mg/dm² polyene fungicide, *e.g*. natamycin, on their surface. In a further embodiment they comprise from 0.05 to 4 mg/dm², preferably from 0.2 to 2 mg/dm², MHEC on their surface (in case a wet coating of 10 µm is applied onto their surface). In yet a further embodiment they comprise from 0.5 to 40 mg/dm², preferably from 2 to 20 mg/dm², MHEC on their surface (in case a wet coating of 100 µm is applied onto their surface).

In a further aspect the invention relates to a method for treating a product comprising the step of incorporating into the product and/or applying onto the product a composition according to the present invention. Treatment of the product with the composition according to the invention prevents mould and/or fungal growth in and/or on the product. Preferably, the product is an agricultural product. By applying the new antimicrobial composition mould and/or fungal growth on or in products such as agricultural products *e.g*. plants, crops, vegetables and/or fruits can be prevented. In other words, the new compositions of the invention protect products such as agricultural products *e.g*. plants, crops, vegetables and/or fruits from mould and/or fungal growth and/or from mould and/or fungal infection and/or from fungal spoilage.

The compositions can be applied on plants, crops, vegetables and/or fruits during and/or after harvesting (post-harvest). Alternatively, plants, crops, vegetables and/or fruits can also be treated with the compositions according to the invention before harvest (pre-harvest) when the plants, crops, vegetables and/or fruits are still on the field or in the greenhouses.

Advantageously, the compositions according to the invention are liquids which can be applied by dipping, immersion, spraying or electrostatic spraying of products such as agricultural products. They may also be added directly in case the substrate is a liquid or semi-liquid. Alternatively, the products can also be treated by brushing using a paintbrush or *e.g*. by application of a pad of cotton wool or cellulose pads impregnated with the antifungal compositions or emulsions of the invention. In another aspect of this invention the antimicrobial compositions may be applied by means of a coating. They may leave a coating, *e.g*. an antifungal coating, on the substrate they are applied to/on. For all these treatments methods and equipment well-known to a person skilled in the art can be used. The treatment methods of course depend on the type product to be treated.

A further aspect of the invention pertains to the use of a composition according to the invention for preventing fungal growth in and/or on a product. Preferably, the product is an agricultural product.

### Examples

### Example 1

### Effect of thickeners on the antifungal efficacy of natamycin on oranges

In the experiment the antifungal activity of antimicrobial compositions comprising natamycin and different thickening agents was examined. The thickening agent examined were xanthan gum, MHEC (Methylhydroxyethylcellulose, Tylopur® MHB3000P), HPMC (Hydroxypropylmethylcellulose, Methocel®) and CMC (Carboxymethylcellulose, Blanose®).

Compositions containing thickening agent and the antifungal agent natamycin were prepared as follows. Thickening agent was dissolved in water by stirring overnight. Thereafter, a suspension containing natamycin was added to the solution containing thickening agent to obtain compositions comprising a final concentration of 0.4 - 0.6% (w/v) thickening agent and a final concentration of 1000 µg/ml natamycin.

Fresh untreated oranges were artificially contaminated. On each orange two spots on the surface area of the peel were damaged and contaminated with a suspension of spores of the mould species *Penicillium roqueforti Thom* (CBS 479.84, IBT 21543). The mould spores were prepared using well-known methods. Six oranges were tested for each antimicrobial composition. After contamination the oranges were dipped into the freshly prepared antimicrobial compositions, dripped off and dried to the air. The oranges were stored in the dark at room temperature in closed boxes, covered with a transparent laminate to allow continuous observation. The relative humidity in the headspace of each box was elevated to 95-100% by addition of water using well-known methods.

The results clearly demonstrate that the antimicrobial composition containing natamycin and the thickening agent MHEC protects oranges better against mould growth than antimicrobial compositions comprising natamycin and HPMC, CMC or xanthan gum (see Table 1).

In a further experiment the antifungal activity of antimicrobial compositions comprising 1000 µg/ml natamycin and 0.2% (w/v) of the thickening agents described above was examined on oranges. The oranges were obtained from a local retailer in The Netherlands. The oranges were treated with spores of the mould *Penicillium italicum* (ATCC 36041). The mould spores were obtained using well-known methods. The oranges were injured according to the method described by Lapere de Bellaire and Dubois (see Plant disease 81:1378-1383, (1987)). Oranges were wounded three times using a cork borer followed by contamination per wound with 5 µl of a *P. italicum* spore suspension containing 10⁶ spores/ml. After incubation for 1 hour at room temperature, the oranges were dipped for one minute into the freshly prepared antimicrobial compositions, dripped off and dried to the air. The experiment was executed in ninefold. The oranges were stored for 23 days under the conditions as described above and were judged visually on mould development.

The results in Table 2 clearly demonstrate that the antimicrobial composition containing natamycin and the thickening agent MHEC protects oranges better against mould growth than antimicrobial compositions comprising natamycin and the thickening agents xanthan gum, HPMC or CMC. Similar results were observed with antimicrobial compositions comprising 0.4% (w/v) thickening agent (data not shown).

**Table 1: Number of moulded oranges after 12 days of storage at room temperature.**

| Antimicrobial composition | Moulded oranges of the total of 6 |
|---|---|
| Natamycin + HPMC | 5 |
| Natamycin + CMC | 3 |
| Natamycin + xanthan gum | 2 |
| Natamycin + MHEC | 0 |

**Table 2: Number of moulded orange wounds after 23 days of storage at room temperature**

| Antimicrobial composition | Moulded orange wounds (total amount of wounds is 9) |
|---|---|
| Control (untreated) | 9 |
| Natamycin | 9 |
| Natamycin + CMC | 9 |
| Natamycin + HPMC | 9 |
| Natamycin + xanthan gum | 6 |
| Natamycin + MHEC | 3 |

### Example 2

### Effect of thickeners on the antifungal efficacy of compositions comprising natamycin and phosphite on oranges

In this experiment the antifungal activity of antimicrobial compositions comprising natamycin, phosphite and the above-mentioned thickening agents was examined on oranges as described in Example 1, with the proviso that oranges were stored for 13 days.

The compositions comprised a final concentration of 0.4% (w/v) thickening agent, 1000 µg/ml natamycin and 240 mM potassium phosphite in a 35 mM K₂CO₃ buffer.

The results in Table 3 show that the antimicrobial composition containing natamycin, phosphite and the thickening agent MHEC protects oranges better against mould growth than antimicrobial compositions comprising natamycin, phosphite and one of the thickening agents xanthan gum, HPMC or CMC.

**Table 3: Number of moulded orange wounds after 13 days of storage at room temperature.**

| Antimicrobial composition | Moulded orange wounds (total amount of wounds is 9) |
|---|---|
| Control (untreated) | 9 |
| Natamycin + phosphite | 4 |
| Natamycin + phosphite + HPMC | 8 |
| Natamycin + phosphite + CMC | 5 |
| Natamycin + phosphite + xanthan gum | 4 |
| Natamycin + phosphite + MHEC | 1 |

### Example 3

### Effect of thickeners on the antifungal efficacy of natamycin on strawberries

In this experiment the antifungal activity of antimicrobial compositions comprising natamycin and the above-mentioned thickening agents was examined on strawberries.

Compositions containing thickening agents and the antifungal agent natamycin were prepared as described in Example 1. The compositions comprised a final concentration of 0.6% (w/v) thickening agent and 1000 µg/ml natamycin.

Fresh untreated strawberries from a local retailer in The Netherlands were artificially contaminated with 5 µl of a freshly prepared concentrated suspension of spores (10⁶ spores/ml) of the mould species *Botrytis cinerea* (ATCC 12481). The mould spores were prepared using well-known methods. One hour after contamination the strawberries were dipped for one minute into the freshly prepared antimicrobial compositions, dripped off and dried to the air. The experiment was executed in ninefold. The strawberries were stored for 6 days under the conditions as described in Example 1 and were judged visually on mould development.

The results in Table 4 clearly demonstrate that the antimicrobial composition containing natamycin and the thickening agent MHEC protects strawberries better against mould growth than antimicrobial compositions comprising natamycin and xanthan gum, HPMC or CMC.

**Table 4: Number of moulded strawberries after 6 days of storage at room temperature.**

| Antimicrobial composition | Moulded strawberries of the total of 9 |
|---|---|
| Control (untreated) | 8 |
| Natamycin | 6 |
| Natamycin + HPMC | 7 |
| Natamycin + CMC | 7 |
| Natamycin + xanthan gum | 5 |
| Natamycin + MHEC | 4 |

### Example 4

### Effect of thickeners on the antifungal efficacy of natamycin on fresh coffee beans

In this experiment the antifungal activity of the antimicrobial compositions comprising natamycin and the above-mentioned thickening agents was examined on fresh coffee beans.

Compositions containing thickening agents and the antifungal agent natamycin were prepared as described in Example 1. The compositions comprised a final concentration of 0.6% (w/v) thickening agent and 1000 µg/ml natamycin.

Fresh untreated coffee beans from a local retailer in The Netherlands were artificially contaminated with 5 µl of a freshly prepared concentrated suspension of spores (10⁶ spores/ml) of the mould *Aspergillus ochraceus* (ATCC 60532). The mould spores were prepared using well-known methods. One hour after contamination the coffee beans were dipped for one minute into the freshly prepared antimicrobial compositions, dripped off and dried to the air. The experiment was executed in ninefold. The coffee beans were stored for 4 days under the conditions as described in Example 1 and were judged visually on mould development.

The results in Table 5 clearly demonstrate that the antimicrobial composition containing natamycin and the thickening agent MHEC protects fresh coffee beans better against mould growth than antimicrobial compositions comprising natamycin and xanthan gum, HPMC or CMC.

**Table 5: Number of moulded coffee beans after 4 days of storage at room temperature.**

| Antimicrobial composition | Moulded coffee beans of the total of 9 |
|---|---|
| Control (untreated) | 9 |
| Natamycin | 9 |
| Natamycin + CMC | 9 |
| Natamycin + xanthan gum | 8 |
| Natamycin + HPMC | 6 |
| Natamycin + MHEC | 5 |

### Example 5

### Effect of thickeners on the antifungal efficacy of compositions comprising natamycin and phospite on bananas

In this experiment the antifungal activity of antimicrobial compositions comprising natamycin, phosphite and the thickening agents MHEC, HPMC and CMC was examined on bananas.

Compositions containing thickening agents, the antifungal agent natamycin and potassium phosphite were prepared as described in Example 2. The compositions comprised a final concentration of 0.6% (w/v) thickening agent, 1000 µg/ml natamycin, 240 mM potassium phosphite in a 35 mM K₂CO₃ buffer.

In the experiment organic bananas from a local retailer in The Netherlands were used. The bananas were treated with spores of the phytopathogenic mould *Colletotrichum musae* (CBS19231). The mould spores were obtained using well-known methods. The bananas were injured according to the method described by Lapere de Bellaire and Dubois (see Plant disease 81:1378-1383, (1987)). Bananas were wounded three times using a cork borer followed by contamination per wound with 5 µl of a *C*. *musae* spore suspension containing 10⁶ spores/ml. After incubation for 1 hour at room temperature, the bananas were dipped for one minute into the freshly prepared antimicrobial compositions, dripped off and dried to the air. The experiment was executed in ninefold. The bananas were stored for 13 days under the conditions as described in Example 1 and were judged visually on mould development.

The results in Table 6 clearly demonstrate that the antimicrobial composition containing natamycin and phosphite and the thickening agent MHEC protects bananas better against mould growth than antimicrobial compositions comprising natamycin and phosphite and the thickening agents HPMC or CMC.

**Table 6: Number of moulded banana wounds after 13 days of storage at room temperature.**

| Antimicrobial composition | Moulded banana wounds (total amount of wounds is 9) |
|---|---|
| Control (untreated) | 9 |
| Natamycin + phosphite + HPMC | 6 |
| Natamycin + phosphite + CMC | 4 |
| Natamycin + phosphite + MHEC | 2 |

In addition the bananas were also visually judged on the disease antracnose which can best be described as the spreading of a brown corrosion around the affected wounds (spoilage). The results are presented in Table 7 and show that the combination with the thickener MHEC gives the best results.

**Table 7: Number of banana wounds with antracnose after 9 days of storage at room temperature.**

| Antimicrobial composition | Wounds with antracnose (total amount of wounds is 9) |
|---|---|
| Control (untreated) | 9 |
| Natamycin + phosphite + HPMC | 8 |
| Natamycin + phosphite + CMC | 7 |
| Natamycin + phosphite + MHEC | 3 |

## Claims

1. An antimicrobial composition comprising natamycin and methylhydroxyethylcellulose.

2. An antimicrobial composition according to claim 1, **characterized in that** it comprises from about 0.005 g/l to about 100 g/l natamycin.

3. An antimicrobial composition according to claim 1 or 2, **characterized in that** it comprises from about 0.5 g/l to about 40 g/l methylhydroxyethylcellulose.

4. An antimicrobial composition according to any one of the claims 1 to 3, **characterized in that** the composition further comprises at least one additional compound selected from the group consisting of an UV-absorber, a sticking agent, a surfactant, an emulsifier, a detergent, a preservative, a stabilizer, a spreading agent, an antioxidant, an anti-foam-forming agent, a wetting agent, a further antimicrobial agent, a filler, a spray oil, a dispersing agent, and a flow additive.

5. An antimicrobial composition according to any one of the claims 1 to 4, **characterized in that** the composition further comprises phosphite.

6. An antimicrobial composition according to any one of the claims 1 to 5, **characterized in that** the composition is solid or liquid.

7. A product comprising the antimicrobial composition according to any one of the claims 1 to 6.

8. A product according to claim 7 which is an agricultural product.

9. A product according to claim 7 or 8 which is normally susceptible to fungal spoilage.

10. A method for treating a product comprising the step of incorporating into the product and/or applying onto the product an antimicrobial composition according to any one of the claims 1 to 6.

11. A method according to claim 10, wherein the fungal growth in and/or on the product is prevented.

12. A method according to claim 10 or 11, wherein the storage life of the product is improved.

13. Use of a composition according to any one of the claims 1 to 6 for preventing fungal growth in and/or on a product.

14. A method according to any one of the claims 10 to 12 or use according to claim 13, **characterized in that** the product is an agricultural product.

## Patentansprüche

1. Antimikrobielle Zusammensetzung, die Natamycin und Methylhydroxyethylcellulose umfasst.

2. Antimikrobielle Zusammensetzung nach Anspruch 1, **dadurch gekennzeichnet, dass** sie ungefähr 0,005 g/l bis ungefähr 100 g/l Natamycin umfasst.

3. Antimikrobielle Zusammensetzung nach Anspruch 1 oder 2, **dadurch gekennzeichnet, dass** sie ungefähr 0,5 g/l bis ungefähr 40 g/l Methylhydroxyethylcellulose umfasst.

4. Antimikrobielle Zusammensetzung nach einem der Ansprüche 1 bis 3, **dadurch gekennzeichnet, dass** die Zusammensetzung weiterhin mindestens eine zusätzliche Verbindung aus der Gruppe UV-Absorber, Haftmittel, Tensid, Emulgator, Detergens, Konservierungsmittel, Stabilisator, Spreizmittel, Antioxidationsmittel, Schaumhemmer, Netzmittel, weiteres antimikrobielles Mittel, Füllstoff, Spray-Öl, Dispergiermittel und Fließhilfsmittel umfasst.

5. Antimikrobielle Zusammensetzung nach einem der Ansprüche 1 bis 4, **dadurch gekennzeichnet, dass** die Zusammensetzung weiterhin Phosphit umfasst.

6. Antimikrobielle Zusammensetzung nach einem der Ansprüche 1 bis 5, **dadurch gekennzeichnet, dass** die Zusammensetzung fest oder flüssig ist.

7. Produkt, das die antimikrobielle Zusammensetzung nach einem der Ansprüche 1 bis 6 umfasst.

8. Produkt nach Anspruch 7, bei dem es sich um ein Agrarprodukt handelt.

9. Produkt nach Anspruch 7 oder 8, das normal gegenüber pilzlichem Verderb anfällig ist.

10. Verfahren zum Behandeln eines Produkts, umfassend den Schritt, dass man eine antimikrobielle Zusammensetzung nach einem der Ansprüche 1 bis 6 in das Produkt einarbeitet und/oder auf das Produkt appliziert.

11. Verfahren nach Anspruch 10, wobei das Pilzwachstum in und/oder auf dem Produkt verhindert wird.

12. Verfahren nach Anspruch 10 oder 11, wobei die Haltbarkeit des Produkts verbessert wird.

13. Verwendung einer Zusammensetzung nach einem der Ansprüche 1 bis 6 zum Verhindern von Pilzwachstum in und/oder auf einem Produkt.

14. Verfahren nach einem der Ansprüche 10 bis 12 oder Verwendung nach Anspruch 13, **dadurch gekennzeichnet, dass** es sich bei dem Produkt um ein Agrarprodukt handelt.

## Revendications

1. Composition antimicrobienne comprenant la natamycine et la méthylhydroxyéthylcellulose.

2. Composition antimicrobienne selon la revendication 1, **caractérisée en ce qu'**elle comprend d'environ 0,005 g/l à environ 100 g/l de natamycine.

3. Composition antimicrobienne selon la revendication 1 ou 2, **caractérisée en ce qu'**elle comprend d'environ 0,5 g/l à environ 40 g/l de méthylhydroxyéthylcellulose.

4. Composition antimicrobienne selon l'une quelconque des revendications 1 à 3, **caractérisée en ce que** la composition comprend en outre au moins un composé supplémentaire choisi dans le groupe constitué par un absorbeur d'UV, un agent adhésif, un tensioactif, un émulsifiant, un détergent, un conservateur, un stabilisant, un agent d'étalement, un antioxydant, un agent antimousse, un agent mouillant, un autre agent antimicrobien, une charge, une huile de pulvérisation, un agent de dispersion et un additif d'écoulement.

5. Composition antimicrobienne selon l'une quelconque des revendications 1 à 4, **caractérisée en ce que** la composition comprend en outre du phosphite.

6. Composition antimicrobienne selon l'une quelconque des revendications 1 à 5, **caractérisée en ce que** la composition est solide ou liquide.

7. Produit comprenant la composition antimicrobienne selon l'une quelconque des revendications 1 à 6.

8. Produit selon la revendication 7, **caractérisé en ce qu'**il s'agit d'un produit agricole.

9. Produit selon la revendication 7 ou 8, **caractérisé en ce qu'**il est normalement sensible à une détérioration par les champignons.

10. Méthode de traitement d'un produit comprenant l'étape d'incorporation dans le produit et/ou d'application sur le produit d'une composition antimicrobienne selon l'une quelconque des revendications 1 à 6.

11. Méthode selon la revendication 10, **caractérisée en ce que** la croissance fongique dans et/ou sur le produit est empêchée.

12. Méthode selon la revendication 10 ou 11, **caractérisée en ce que** la durée de conservation du produit est améliorée.

13. Utilisation d'une composition selon l'une quelconque des revendications 1 à 6, pour empêcher la croissance fongique dans et/ou sur un produit.

14. Méthode selon l'une quelconque des revendications 10 à 12 ou utilisation selon la revendication 13, **caractérisée en ce que** le produit est un produit agricole.
